# EUROPEAN PATENT SPECIFICATION

(11) **EP 3 305 831 B1**
(45) Date of publication and mention of the grant of the patent: **27.11.2019**
(21) Application number: 16803053.4
(22) Date of filing: 19.05.2016
(51) Int. Cl.: C08G 75/045, C09J 4/00, C09J 4/02, C09J 11/06

(54) **CURABLE COMPOSITION AND ADHESIVE FOR OPTICAL APPLICATIONS USING SAME**
HÄRTBARE ZUSAMMENSETZUNG UND KLEBSTOFF FÜR OPTISCHE ANWENDUNGEN MIT VERWENDUNG DAVON
COMPOSITION DURCISSABLE ET ADHÉSIF POUR APPLICATIONS OPTIQUES L'UTILISANT

(30) Priority: 05.06.2015 JP 2015114841
(43) Date of publication of application: 11.04.2018
(73) Proprietor: Mitsubishi Gas Chemical Company, Inc., Tokyo 100-8324 (JP)
(72) Inventor: NAMIKI, Kousuke, Tokyo 125-8601 (JP); FUSE, Sawako, Tokyo 125-8601 (JP); OKAZAKI, Hitoshi, Tokyo 100-8324 (JP); KOSHIISHI, Eiji, Tokyo 100-8324 (JP); FURUKAWA, Kikuo, Tokyo 125-8601 (JP); HORIKOSHI, Hiroshi, Tokyo 125-8601 (JP)
(74) Representative: Hoffmann Eitle
(86) International application number: PCT/JP2016/064808
(87) International publication number: WO 2016/194618

(56) References cited:
- WO-A1-2014/061687
- WO-A1-2014/119717
- WO-A1-2014/133052
- JP-A- H05 164 994
- JP-A- 2010 265 441
- JP-A- 2011 225 644
- JP-A- 2012 233 048
- JP-A- 2015 199 841

## Description

### TECHNICAL FIELD

The present invention relates to a curable composition, and further relates to an adhesive for optical applications to be used for preparing composite optical elements.

### BACKGROUND ART

Photocurable compositions mainly composed of an acrylate compound or the like are widely used as adhesives for preparing optical elements. Adhesiveness, curability, mechanical strength, durability and optical characteristics are basic performances of adhesives, but recently, a refractive index has been becoming important performance with the sophistication of optical elements. In particular, it is highly desired to provide a higher refractive index of an adhesive because flexibility of optical design is improved thereby. Examples of applications of adhesives having a high refractive index include achromatic lenses structured by bonding two lenses together, hybrid-type aspherical lenses structured by a composite of glass and resin, and prisms having a complex shape such as dichroic prisms. Adhesives to be used for these applications are naturally required to have not only a high refractive index, but also performances including adhesion, photocurability, colorless transparency and a viscosity suitable for work. Further, when bonding high refractive index resin substrates or glass substrates together, an adhesive having a high refractive index, which can reduce light reflection of the adhesive interface, is useful. In this regard, the difference between the refractive index of the base materials and that of the adhesive is desirably about 0.03 or less.

As polyfunctional (meth)acrylate compounds having a high refractive index, 9,9-bis(4-(2-acryloxyethoxy)phenyl)fluorene (hereinafter referred to as "A-BPEF") (refractive index of cured product: 1.62), 4,4'-bis(methacryloylthio)diphenylsulfide (hereinafter referred to as "MPSMA") (refractive index of cured product: 1.69), etc. are known. However, since these compounds are solid at normal temperature, it is difficult to use them solely.

Moreover, in general, in the case of polyfunctional (meth)acrylate compounds, shrinkage due to curing is large, and when using such a compound as an adhesive, it causes reduction of adhesion. Meanwhile, it is known that shrinkage due to curing is small in the case of ene-thiol compositions obtained by combining an ethylenically unsaturated compound such as a (meth)acrylate compound and a thiol compound.

Patent Document 1 describes an ene-thiol composition composed of A-BPEF, an ethylenically unsaturated compound and a thiol compound. According to the Examples, refractive indexes of cured products are just 1.58 to 1.61. Patent Document 2 describes an ene-thiol composition composed of MPSMA, a vinylic monomer and a polythiol compound. According to the Examples, the highest refractive index of the cured product is 1.649. However, MPSMA tends to be yellowed, and since it is solid, the amount of dissolution in the composition is limited. Patent Document 3 describes a resin composition composed of a resin component having a fluorene ring and a sulfur-containing compound having a diphenylsulfide skeleton such as MPSMA, and a resin having a refractive index of 1.724 is described therein as an example. However, the resin composition in the invention is substantially a thermoplastic resin obtained by kneading a polyester having a fluorene ring and a sulfur-containing compound, but not a curable composition. Naturally, photocurability cannot be imparted thereby. Patent Document 4 describes an ene-thiol composition having a refractive index of 1.64 or higher as an example. However, since stability of the composition is reduced due to, for example, MPSMA which is blended in order to provide a higher refractive index, for example, low-temperature storage is required, and the improvement thereof is desired.

### PRIOR ART DOCUMENTS

### PATENT DOCUMENTS

Patent Document 1: Japanese Laid-Open Patent Publication No. 2010-254732
Patent Document 2: Japanese Laid-Open Patent Publication No. H03-021638
Patent Document 3: Japanese Laid-Open Patent Publication No. 2005-187661
Patent Document 4: Japanese Laid-Open Patent Publication No. 2012-233048

### SUMMARY OF THE INVENTION

### PROBLEMS TO BE SOLVED BY THE INVENTION

Accordingly, the objective of the present invention is to provide a curable composition, which has a high refractive index as an optical characteristic and also has performances as an adhesive for optical applications such as low shrinkage, photocurability, colorless transparency and a viscosity suitable for work, and which further has practically sufficient stability.

### MEANS FOR SOLVING THE PROBLEMS

The present inventors diligently made researches in order to solve the above-described problems, and found that an ene-thiol composition, which is obtained by combining a poly(meth)acrylate compound having a fluorene ring, a polythiol compound having a thioalkyl structure, an ene compound having a polycyclic aromatic hydrocarbon skeleton and a polymerization initiator, has a high refractive index as an optical characteristic, also has performances required as an adhesive for optical applications such as low shrinkage, photocurability, colorless transparency and a viscosity suitable for work, and further has good stability. Note that in this specification, an acrylate compound and a methacrylate compound are collectively referred to as a (meth)acrylate compound. Therefore, a (meth)acryloyl group includes both an acryloyl group and a methacryloyl group.

Specifically, the present invention is disclosed in the appended claims.

### ADVANTAGEOUS EFFECT OF THE INVENTION

According to the present invention, it is possible to provide a curable composition, which has a high refractive index as an optical characteristic and also has performances required as an adhesive for optical applications such as low shrinkage, photocurability, colorless transparency and a viscosity suitable for work, and which further has practically sufficient stability. In addition, by using the curable composition of the present invention as an adhesive for bonding high refractive index substrates together, light reflection of the adhesive interface can be reduced and the interface portion can be made less noticeable.

### EMBODIMENTS FOR CARRYING OUT THE INVENTION

The curable composition of the present invention contains a poly(meth)acrylate compound having a fluorene ring (component (A)), a polythiol compound having a thioalkyl structure (component (B)), an ene compound having a polycyclic aromatic hydrocarbon skeleton (component (C)) and a polymerization initiator (component (D)).

The component (A), the component (B), the component (C) and the component (D) are essential components of the curable composition of the present invention, and it is preferred to add at least one of the below-described component (E), component (F), component (G) and component (H).

By inclusion of an ethylenically unsaturated compound (component (E)) having a di(thiophenyl) sulfide structure or a di(thiophenyl) sulfone structure, a higher refractive index can be obtained. Further, as a dilutable monomer, an ethylenically unsaturated compound (component (F)) other than the component (A), the component (C) and the component (E) may be contained.

### (Component (A))

The poly(meth)acrylate compound having a fluorene ring (component (A)) is a compound having a fluorene ring and having two or more (meth)acryloyl groups in one molecule. The fluorene ring has the effect of increasing a refractive index. Moreover, shrinkage due to curing is small attributed to a bulky structure of the fluorene ring. In particular, when pursuing a higher refractive index, preferred is a compound represented by general formula (1) below: 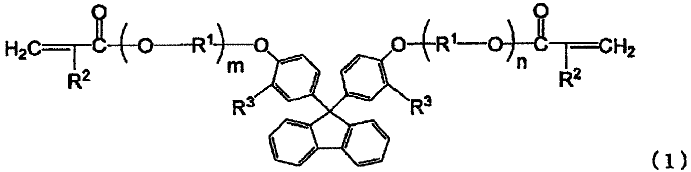 wherein: m and n represent integers, wherein the sum of m and n is 0 to 4; R¹ represents an alkylene group having 1 to 5 carbon atoms; R² represents a hydrogen atom or a methyl group; and R³ represents a hydrogen atom or a methyl group. Examples of the compound represented by general formula (1) include 9,9-bis(4-(2-acryloxyethoxy)phenyl)fluorene.

As the component (A), substances may be used solely, or two or more of them may be used as a mixture. The content of the component (A) is not particularly limited, but it is preferably 10 to 90 parts by mass, and more preferably 15 to 70 parts by mass relative to 100 parts by mass of the curable composition.

### (Component (B))

The polythiol compound having a thioalkyl structure (component (B)) is a compound having a thioalkyl structure and having two or more thiol groups in one molecule. The thioalkyl structure is a structure in which a divalent sulfur is substituted with two alkyl groups, and it is also called alkylsulfide or alkylthioether. The thioalkyl structure contains many sulfur atoms having high atomic refraction, and therefore has a higher effect of increasing a refractive index. Moreover, though aromatic rings contained in the component (A), the component (C) and the component (E) are oxidized by light or heat and easily yellowed, since thiol groups have antioxidant effects, a cured product having excellent colorless transparency can be obtained. Furthermore, though the component (A) is a solid or a high-viscosity liquid at normal temperature, the viscosity is adjusted to be suitable for work by dilution effects of the component (B). In addition, since shrinkage due to curing is small in the case of addition polymerization of a thiol group with an ethylenically unsaturated bond, in the case of use as an adhesive, good adhesion can be obtained.

In particular, when pursuing a higher refractive index and dilution effects, preferred is a thiol compound represented by general formula (2) below: 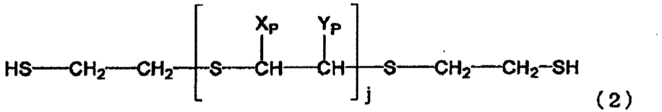 wherein: j represents an integer of 0 to 3; and Xp and Yp each independently represent hydrogen or methylthiol. Regarding Xp and Yp in general formula (2) above, for example, in the case of j=2, X₁, X₂, Y₁ and Y₂ each independently represent a substituent. Examples of the compound represented by general formula (2) include 1,5-dimercapto-3-thiapentane, 4-mercaptomethyl-1,8-dimercapto-3,6-dithiaoctane, 4,8-bis(mercaptomethyl)-1,11-dimercapto-3,6,9-trithiaundecane, 4,7-bis(mercaptomethyl)-1,11-dimercapto-3,6,9-trithiaundecane and 5,7-bis(mercaptomethyl)-1,11-dimercapto-3,6,9-trithiaundecane.

As the component (B), substances may be used solely, or two or more of them may be used as a mixture. The higher the content of the component (B) is, the more excellent the property to provide a higher refractive index, low shrinkage, colorless transparency and dilution effects are. However, since thiol groups are reacted with ethylenically unsaturated bond groups by means of addition reaction at 1:1 (mol), an excess amount of thiol groups tend to be unreacted and remain, and it is not preferred. Accordingly, regarding the content of the component (B), the functional group equivalent ratio of the thiol group contained in the component (B) is preferably 0.2 to 1.5, and more preferably 0.5 to 1.35 relative to the total amount of the ethylenically unsaturated bond group contained in the component (A), the component (C), the component (E) and the component (F).

### (Component (C))

By introduction of the ene compound having a polycyclic aromatic hydrocarbon skeleton (component (C)), a higher refractive index can be provided, and the viscosity can be adjusted to be suitable for easy handling as an adhesive. The structural formula of the component (C) is represented by general formula (3) below: 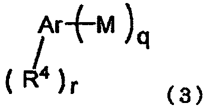 wherein: Ar represents a polycyclic aromatic hydrocarbon; R⁴ represents an alkyl group having 1 to 3 carbon atoms which is a substituent to the polycyclic aromatic hydrocarbon; M represents a functional group having an ene skeleton selected from general formula (4) or general formula (5) below; q represents an integer of 1 to 4; and r represents an integer of 0 to 10, 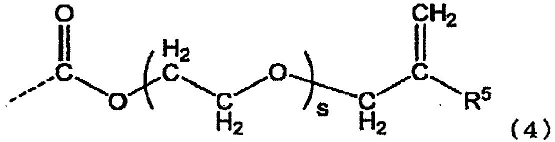 wherein: R⁵ represents a hydrogen atom or a methyl group; s represents an integer of 0 to 2; and a dotted line represents bonding to Ar, 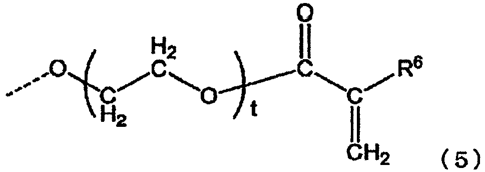 wherein: R⁶ represents a hydrogen atom or a methyl group; t represents an integer of 0 to 2; and a dotted line represents bonding to Ar.

The polycyclic aromatic hydrocarbon is at least one compound selected from naphthalene, anthracene, pentacene, pyrene, benzopyrene, chrysene and triphenylene. More preferred is naphthalene.

Preferred examples of the ene skeleton bound to the polycyclic aromatic hydrocarbon include those represented by general formula (4) or general formula (5). The number of substitution, q, is preferably 1 to 4, and more preferably 1 to 2. When q is 2 or more, as the ene skeleton, two or more structures represented by general formula (4) may be possessed, or two or more structures represented by general formula (5) may be possessed, or at least one structure represented by general formula (4) and at least one structure represented by general formula (5) may be possessed. Further, when two or more structures represented by general formula (4) are possessed, the structures may be the same or different. Similarly, when two or more structures represented by general formula (5) are possessed, the structures may be the same or different.

In particular, preferred examples of the component (C) having the structure represented by general formula (4) include diallyl 1,4-naphthalenedicarboxylate, diallyl 2,3-naphthalenedicarboxylate, diallyl 1,5-naphthalenedicarboxylate, diallyl 1,8-naphthalenedicarboxylate and diallyl 2,6-naphthalenedicarboxylate, and preferred examples of the component (C) having the structure represented by general formula (5) include 1-naphthyl (meth)acrylate, 2-naphthyl (meth)acrylate, (2-(meth)acryloxyethoxy) 1-naphthyl and (2-(meth)acryloxyethoxy) 2-naphthyl.

As the component (C), substances may be used solely, or two or more of them may be used as a mixture. The content of the component (C) is not particularly limited, but it is preferably 5 to 90 parts by mass, and more preferably 10 to 70 parts by mass relative to 100 parts by mass of the curable composition.

### (Component (D))

The polymerization initiator (component (D)) is not particularly limited as long as it generates active radical species, for example, when irradiated with an active light (e.g., ultraviolet light and visible light) or heated. Specific examples of the component (D) include 2,2-methoxy-1,2-diphenylethane-1-one, 1-hydroxy-cyclohexyl phenyl ketone, 2-hydroxy-2-methyl-1-phenylpropane-1-one, 2-methyl-1-[4-(methylthio)phenyl]-2-morpholino propan-1-one, 2-benzyl-2-dimethylamino-1-(4-morpholino phenyl)-butanone-1, bis(2,4,6-trimethyl benzoyl)-phenylphosphine oxide and 2,4,6-trimethylbenzoyl-diphenyl-phosphine oxide.

As the component (D), substances may be used solely, or two or more of them may be used as a mixture. The content of the component (D) is not particularly limited, but it is preferably 0.1 to 10 parts by mass, and more preferably 0.5 to 5 parts by mass relative to 100 parts by mass of the curable composition.

### (Component (E))

The ethylenically unsaturated compound (component (E)) represented by general formula (6): 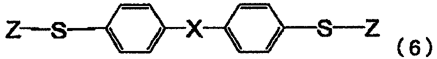 wherein: X represents a sulfur atom or a sulfonyl group; and Z represents a (meth)acryloyl group, a vinyl group or an allyl group, has the effect of increasing a refractive index attributed to the di(thiophenyl) sulfide structure or the di(thiophenyl) sulfone structure. Examples of the compound represented by general formula (6) above include 4,4'-bis(methacryloylthio)diphenylsulfide.

As the component (E), substances may be used solely, or two or more of them may be used as a mixture. The higher the content of the component (E) is, the higher the effect of increasing a refractive index is, but in this regard, yellowing may be increased, and there is a case where the component (E) is not dissolved in a composition solution. Accordingly, the content of the component (E) is preferably 50 parts by mass or less, and more preferably 35 parts by mass or less relative to 100 parts by mass of the curable composition.

### (Component (F))

The ethylenically unsaturated compound (component (F)) contained as a dilutable monomer other than the component (A), the component (C) and the component (E) is a compound having at least one ethylenically unsaturated bond group in the molecule, and is not limited as long as it has the effect of decreasing the viscosity of the composition. In particular, a compound having an aromatic ring or a heterocyclic ring is preferred for increasing a refractive index. Preferred specific examples of the component (F) include triallyl isocyanurate, triallyl cyanurate, diallyl phthalate, diallyl isophthalate, diallyl terephthalate, triallyl trimellitate, tetraallyl pyromellitate, phenyl (meth)acrylate, 2-phenoxyethyl (meth)acrylate, o-phenylphenol (meth)acrylate, 2-(o-phenylphenoxy) ethyl (meth)acrylate, benzyl (meth)acrylate and 2-(benzyloxy)ethyl (meth)acrylate.

As the component (F), substances may be used solely, or two or more of them may be used as a mixture. The higher the content of the component (F) is, the higher dilution effects are, but meanwhile the refractive index is reduced. Accordingly, the content of the component (F) is preferably 40 parts by mass or less, and more preferably 20 parts by mass or less relative to 100 parts by mass of the curable composition.

It is possible to add a polymerization inhibitor, an acid component, an antioxidant, a light stabilizer (HALS), an ultraviolet absorber, a silane coupling agent, an adherence agent for substrates such as phosphoric acid acrylate, a mold release agent, a pigment, a dye, etc. to the curable composition of the present invention according to need.

### (Component (G))

Examples of the polymerization inhibitor (stabilizer) include a free-radical polymerization inhibitor (component (G)). As in the case of usual ene-thiol compositions, as the free-radical polymerization inhibitor, a general radical scavenger can be used. N-oxo compounds generally have high stabilization effects, and among them, an N-nitrosophenylhydroxylamine salt derivative has high stabilization effects and therefore is preferred. Further, N-nitrosophenylhydroxylamine aluminum salt, which has relatively high solubility in many monomers, is particularly preferred. As in the case of general ene-thiol compositions, remarkable stabilization effects can be obtained even by the addition in a small amount, about 0.001 parts by mass relative to 100 parts by mass of the total amount of monomer components. In the case of the addition in a large amount, the stability of the ene-thiol composition is slightly reduced and color tone deterioration is caused. Therefore, the adding amount is preferably 0.001 to 1 parts by mass, and particularly preferably 0.002 to 0.5 parts by mass relative to 100 parts by mass of the total amount of monomer components. However, even when the component (G) is added in an amount beyond the above-described range, it does not lead to significant reduction in the stability of the curable composition. Note that the component (A), the component (B), the component (C), the component (E) and the component (F) described above correspond to the monomer components. Specific examples of the component (G) include: hydroquinones such as hydroquinone, methylhydroquinone, t-butylhydroquinone and hydroquinone monomethyl ether; nitroso compounds such as p-nitrosophenol, nitrosobenzene, N-nitrosodiphenylamine, isononyl nitrite, N-nitrosocyclohexylhydroxylamine, N-nitrosophenylhydroxylamine, N,N'-dinitrosophenylenediamine, or salts thereof; nitrone compounds such as α-phenyl-N-t-butylnitrone and α-naphthyl-N-t-butylnitrone; and nitroxide compounds such as 2,2,6,6-tetramethyl-1-piperidinoxide (TEMPO) and 4-hydroxy-2,2,6,6-tetramethyl-1-piperidinoxide.

### (Component (H))

An acid (component (H)) may be added as a stabilizer. The acid (component (H)) exerts polymerization inhibition effects. As the acid (component (H)), any type of acid such as protonic acid, Lewis acid, organic acid and inorganic acid can be used as long as the acid has solubility relative to the ene-thiol composition. As the component (H), substances may be used solely, or two or more of them may be used in combination. Further, an acidic functional group may be introduced by reacting a reactive acid compound such as vinyl sulfonic acid with another component of the composition in advance. Specific examples of the component (H) include: alkyl sulfonic acids such as methanesulfonic acid, trifluoromethanesulfonic acid, ethane sulfonic acid, camphorsulfonic acid and dodecyl sulfuric acid; aromatic sulfonic acids such as benzenesulfonic acid, p-toluenesulfonic acid and dodecylbenzenesulfonic acid; sulfonimides such as methanesulfonimide and trifluoromethanesulfonimide; phosphoric acids, phosphonic acids and phosphinic acids such as KAYAMER PM-2 and PM-21 (both are methacrylate phosphate, manufactured by Nippon Kayaku Co., Ltd.), methanephosphonic acid, benzenephosphonic acid and benzenephosphinic acid; carboxylic acids such as trifluoroacetic acid and oxalic acid; acids having an acidic hydroxyl group such as phenol, picric acid and squaric acid; Lewis acids such as boron trifluoride, triphenyl borate and triethoxyaluminium; polyacids such as molybdic acid, silicomolybdic acid and phosphotungstic acid; and inorganic acids such as sulfuric acid and hydrogen chloride. In many cases, inorganic acid has low solubility relative to the ene-thiol composition, and weak protonic acid is less likely to effectively act as an acid in an organic monomer. Therefore, organic strong acids such as organic sulfonic acid, organic phosphoric (phosphorous) acid and sulfoneimide are particularly preferred.

The optimum amount of the acid to be added varies depending on the acid strength and the molecular weight of the acid, but in the case of a strong acid having a PKa value of 2 or less such as a sulfonic acid derivative, the amount thereof to be added is preferably 0.01 to 1 parts by mass, and particularly preferably 0.02 to 0.5 parts by mass relative to 100 parts by mass of the total amount of monomer components. When using a moderately strong acid having a PKa value of 2 to 4 such as phosphoric acid, the amount thereof to be added is preferably 0.05 to 10 parts by mass, and particularly preferably 0.1 to 5 parts by mass relative to 100 parts by mass of the total amount of monomer components. Note that the component (A), the component (B), the component (C), the component (E) and the component (F) described above correspond to the monomer components. In the case where the adding amount is small, polymerization inhibition effects are not sufficient, and in the case where the adding amount is large, the ene-thiol composition becomes destabilized, and therefore, in both the cases, it is difficult to obtain practically sufficient thermal stability.

The curable composition of the present invention can be obtained by homogeneously mixing the components at normal temperature or under heating according to the common method. The composition after mixing may be subjected to filtration, defoaming, etc. according to need.

Regarding the viscosity of the curable composition, on the assumption of use as an adhesive, when the viscosity is too low, the adhesive drips or flows and a gap is caused between adhered bodies at the time of bonding, and therefore it is not preferred. When the viscosity is too high, it is difficult to discharge or apply the adhesive and bubbles are caught at the time of bonding, and therefore it is not preferred. The viscosity suitable for workability in the present invention cannot be flatly defined because it depends on the usage pattern of the adhesive such as an applying method and a bonding method, but the viscosity is preferably 500 to 20,000 mPa·s.

### EXAMPLES

Hereinafter, the present invention will be specifically described by way of illustrative examples, but the present invention is not limited thereto.

### <Viscosity>

The viscosity of the curable composition was measured at 25°C using a cone/plate-type viscometer DV-II+ (manufactured by BROOKFIELD).

### <Refractive index>

The refractive index of the curable composition or cured product was measured using an Abbe refractometer NAR-3T (manufactured by Atago Co., Ltd.).

### <Storage stability>

Regarding storage stability, the case where the increase rate of the viscosity when stored at 20°C for 2 months was less than 10% of the viscosity immediately after preparation was evaluated as good (○), the case where it was 10% or more and less than 50% was evaluated as slightly unstable (Δ), and the case where it was 50% or more was evaluated as unstable (×).

### <Interface visibility>

Regarding visibility of the adhesive interface of high refractive index substrates, high refractive index thiourethane resin substrates having a thickness of 2.5 mm (nd=1.664) were bonded together using each composition, and it was observed under indoor lighting. The case where the adhesive interface was unnoticeable was evaluated as good (○), the case where it was slightly noticeable was evaluated as slightly poor (Δ), and the case where it was noticeable was evaluated as poor (×). Note that the high refractive index thiourethane resin substrates were prepared by thermally polymerizing an isomeric mixture of 4,8-bis(mercaptomethyl)-1,11-dimercapto-3,6,9-trithiaundecane, 4,7-bis(mercaptomethyl)-1,11-dimercapto-3,6,9-trithiaundecane and 5,7-bis(mercaptomethyl)-1,11-dimercapto-3,6,9-trithiaundecane with m-xylylene diisocyanate according to the method described in Japanese Laid-Open Patent Publication No. H07-252207.

### <Peeling resistance>

Regarding peeling resistance, a sample obtained by bonding high refractive index thiourethane resin substrates together was dropped from a height of 30 cm onto a stainless steel plane table. The case where peeling was not caused was evaluated as good (○), the case where peeling was caused partially was evaluated as slightly poor (A), and the case where peeling was caused wholly was evaluated as poor (x).

### Example 1

40 g of 9,9-bis(4-(2-acryloxyethoxy)phenyl)fluorene (component (A)), 30 g of 1,5-dimercapto-3-thiapentane (component (B)), 30 g of diallyl 1,4-naphthalenedicarboxylate (component (C)), 3 g of 1-hydroxy-cyclohexyl phenyl ketone (component (D)) and 0.01 g of aluminum N-nitrosophenylhydroxylamine (component (G)) were put into a 300 mL flask, and the mixture was stirred at 60°C for 1 hour to prepare a curable composition.

The curable composition was sandwiched by 2 glass plates subjected to mold release treatment together with a spacer of 0.25 mm, and it was irradiated with a metal halide lamp (12 mW/cm²) for 3 minutes, and after that, a cured film was peeled from the glass plates. Thus a cured film having a thickness of 0.25 mm (a sample for measurement of the refractive index of the cured product) was prepared.

Further, a sample for observation of the adhesive interface of high refractive index substrates and for evaluation of peeling resistance was prepared in a manner similar to that described above, except that the curable composition was sandwiched by high refractive index thiourethane resin substrates (nd=1.667) instead of the glass plates together with a spacer of 0.05 mm and it was cured.

Physical properties of the curable composition and the cured film (cured product) were as shown in Table 1 below.

### Examples 2-5

A curable composition and a cured film were prepared in manners similar to those in Example 1, except that the type and the feed amount of each of the component (A), the component (B) and the component (C) were changed to those shown in Table 1 below. Physical properties of the curable composition and the cured film (cured product) were as shown in Table 1 below.

### Examples 6-9

A curable composition and a cured film were prepared in manners similar to those in Example 1, except that the type and the feed amount of each of the component (A), the component (B), the component (C), the component (E), the component (G) and the component (H) were changed to those shown in Table 1 below and stirring and mixing was performed under anaerobic conditions at 40°C. Physical properties of the curable composition and the cured film (cured product) were as shown in Table 1 below.

### Comparative Examples 1-5

A curable composition and a cured film were prepared in manners similar to those in Example 1, except that the type and the feed amount of each of the component (A), the component (B), the component (C) and the component (F) were changed to those shown in Table 2 below. Physical properties of the curable composition and the cured film (cured product) were as shown in Table 2 below. Note that values of physical properties inferior to those of the Examples are underlined.

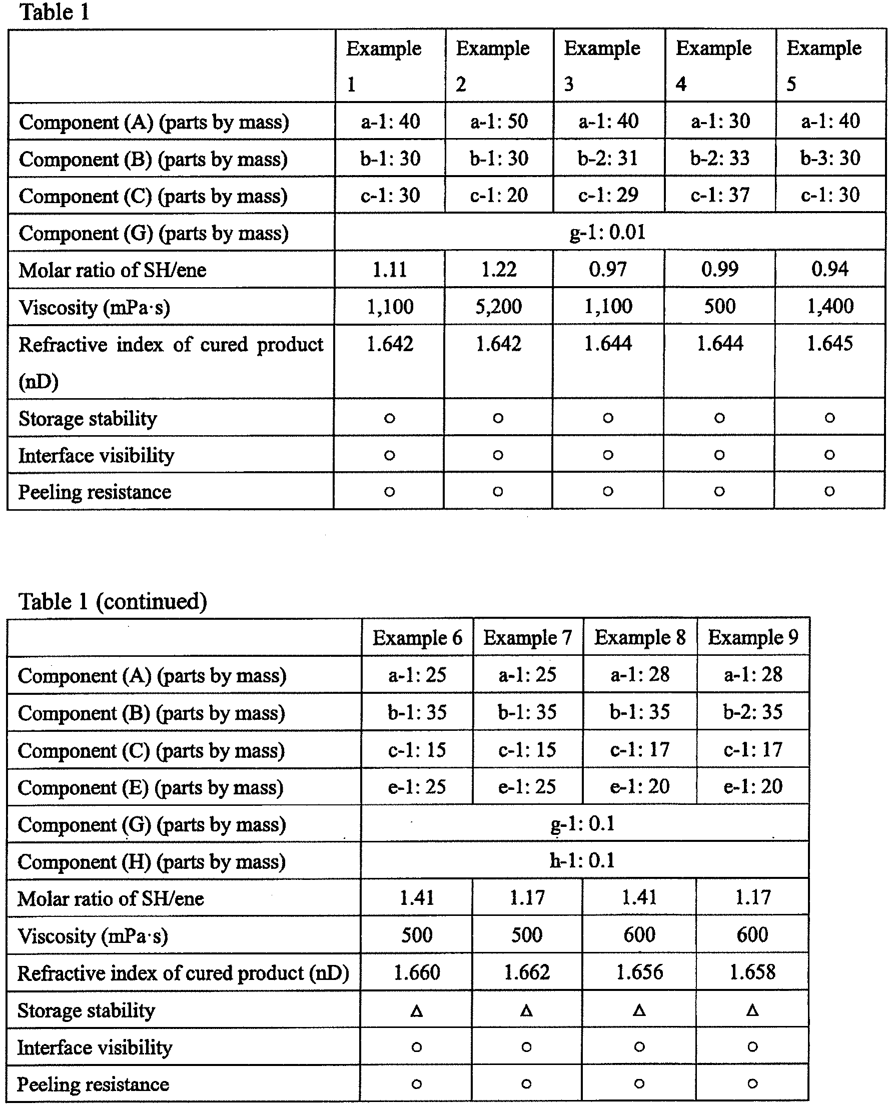

**Table 2**

| | Comparative Example 1 | Comparative Example 2 | Comparative Example 3 | Comparative Example 4 | Comparative Example 5 |
|---|---|---|---|---|---|
| Component (A) (parts by mass) | a-1: 100 | a-1: 70 | | a-1: 70 | a-1: 59 |
| Component (B) (parts by mass) | | | b-2: 53 | b-2: 30 | b-2: 30 |
| Component (C) (parts by mass) | | | | | |
| Component (F) (parts by mass) | | f-1: 30 | f-2: 47 | | f-3:11 |
| Component (G) (parts by mass) | | g-1: 0.01 | | | |
| Molar ratio of SH/ene | - | - | 1.08 | 1.26 | 1.14 |
| Viscosity (mPa·s) | >100,000 | 7,100 | 90 | 50,000 | 14,000 |
| Refractive index of cured product (nD) | 1.626 | 1.609 | 1.623 | 1.645 | 1.638 |
| Storage stability | unmeasurable | ○ | ○ | ○ | ○ |
| Interface visibility | Δ | × | Δ | ○ | Δ |
| Peeling resistance | × | ○ | Δ | Δ | Δ |

### Supplementary explanation

Storage stability:
○: the increase rate of the viscosity was less than 10%
Δ: the increase rate of the viscosity was 10% or more and less than 50%

Comparative Example 1: since it was in a solid state at room temperature, it was impossible to evaluate storage stability thereof.

Explanation of abbreviations in tables
a-1: 9,9-bis(4-(2-acryloxyethoxy)phenyl)fluorene
b-1: 1,5-dimercapto-3-thiapentane
b-2: 4-mercaptomethyl-1,8-dimercapto-3,6-dithiaoctane
b-3: isomeric mixture of 4,8-bis(mercaptomethyl)-1,11-dimercapto-3,6,9-trithiaundecane, 4,7-bis(mercaptomethyl)-1,11-dimercapto-3,6,9-trithiaundecane and 5,7-bis(mercaptomethyl)-1,11-dimercapto-3,6,9-trithiaundecane
c-1: diallyl 1,4-naphthalenedicarboxylate
e-1: 4,4'-bis(methacryloylthio)diphenylsulfide
f-1: 2-phenoxyethyl acrylate
f-2: triallyl isocyanurate
f-3: benzyl acrylate
g-1: aluminum N-nitrosophenylhydroxylamine
h-1: (+)-10-camphorsulfonic acid

## Claims

1. A curable composition which comprises a poly(meth)acrylate compound having a fluorene ring (component (A)), a polythiol compound having a thioalkyl structure (component (B)), an ene compound having a polycyclic aromatic hydrocarbon skeleton (component (C)) and a polymerization initiator (component (D)),
wherein the component (C) is a compound represented by general formula (3): 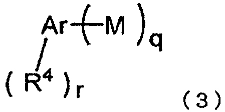 wherein: Ar represents a polycyclic aromatic hydrocarbon; R⁴ represents an alkyl group having 1 to 3 carbon atoms which is a substituent to the polycyclic aromatic hydrocarbon; M represents a functional group having an ene skeleton selected from general formula (4) or general formula (5) below; q represents an integer of 1 to 4; and r represents an integer of 0 to 10, 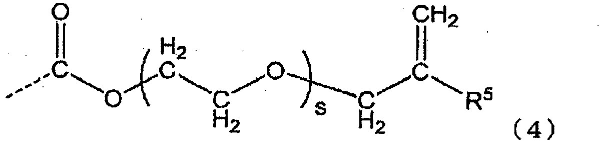 wherein: R⁵ represents a hydrogen atom or a methyl group; s represents an integer of 0 to 2; and a dotted line represents bonding to Ar, 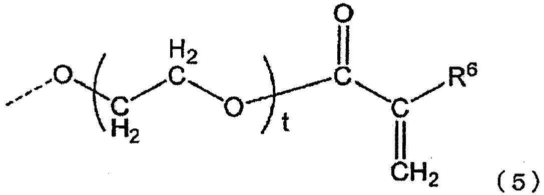
wherein: R⁶ represents a hydrogen atom or a methyl group; t represents an integer of 0 to 2; and a dotted line represents bonding to Ar, and
wherein the polycyclic aromatic hydrocarbon is at least one compound selected from the group consisting of naphthalene, anthracene, pentacene, pyrene, benzopyrene, chrysene and triphenylene.

2. The curable composition according to claim 1, wherein the component (A) is a compound represented by general formula (1): 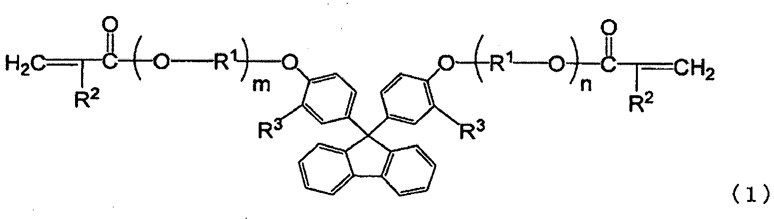 wherein: m and n represent integers, wherein the sum of m and n is 0 to 4; R¹ represents an alkylene group having 1 to 5 carbon atoms; R² represents a hydrogen atom or a methyl group; and R³ represents a hydrogen atom or a methyl group.

3. The curable composition according to claim 2, wherein the component (A) is 9,9-bis(4-(2-acryloxyethoxy)phenyl)fluorene.

4. The curable composition according to any one of claims 1 to 3, wherein the component (B) is a compound represented by general formula (2): 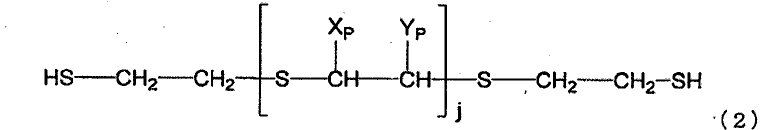 wherein: j represents an integer of 0 to 3; and Xp and Yp each independently represent a hydrogen atom or a methylthiol group.

5. The curable composition according to claim 4, wherein the component (B) is at least one compound selected from the group consisting of 1,5-dimercapto-3-thiapentane, 4-mercaptomethyl-1,8-dimercapto-3,6-dithiaoctane, 4,8-bis(mercaptomethyl)-1,11-dimercapto-3,6,9-trithiaundecane, 4,7-bis(mercaptomethyl)-1,11-dimercapto-3,6,9-trithiaundecane and 5,7-bis(mercaptomethyl)-1,11-dimercapto-3,6,9-trithiaundecane.

6. The curable composition according to any one of claims 1 to 5, wherein the component (C) is at least one compound selected from the group consisting of diallyl 1,4-naphthalenedicarboxylate, diallyl 2,3-naphthalenedicarboxylate, diallyl 1,5-naphthalenedicarboxylate, diallyl 1,8-naphthalenedicarboxylate, diallyl 2,6-naphthalenedicarboxylate, 1-naphthyl (meth)acrylate, 2-naphthyl (meth)acrylate, (2-(meth)acryloxyethoxy) 1-naphthyl and (2-(meth)acryloxyethoxy) 2-naphthyl.

7. The curable composition according to any one of claims 1 to 6, which further comprises an ethylenically unsaturated compound (component (E)) represented by general formula (6): 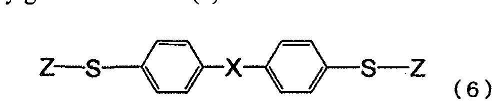 wherein: X represents a sulfur atom or a sulfonyl group; and Z represents a (meth)acryloyl group, a vinyl group or an allyl group.

8. The curable composition according to claim 7, wherein the component (E) is 4,4'-bis(methacryloylthio)diphenylsulfide.

9. The curable composition according to claim 7 or 8, which further comprises an ethylenically unsaturated compound (component (F)) as a dilutable monomer other than the component (A), the component (C) and the component (E).

10. The curable composition according to claim 9, wherein the component (F) is at least one compound selected from the group consisting of triallyl isocyanurate, triallyl cyanurate, diallyl phthalate, diallyl isophthalate, diallyl terephthalate, triallyl trimellitate, tetraallyl pyromellitate, phenyl (meth)acrylate, 2-phenoxyethyl (meth)acrylate, o-phenylphenol (meth)acrylate, 2-(o-phenylphenoxy) ethyl (meth)acrylate, benzyl (meth)acrylate and 2-(benzyloxy)ethyl (meth)acrylate.

11. The curable composition according to any one of claims 1 to 10, which comprises a free radical polymerization inhibitor (component (G)) as a stabilizer.

12. The curable composition according to claim 11, wherein the component (G) is at least one compound selected from the group consisting of a nitroso compound, a nitrone compound and a nitroxide compound.

13. The curable composition according to claim 11 or 12, wherein the component (G) is N-nitrosophenylhydroxylamine salt derivative.

## Patentansprüche

1. Härtbare Zusammensetzung, die eine Poly(meth)acrylatverbindung mit einem Fluorenring (Komponente (A)), eine Polythiolverbindung mit einer Thioalkylstruktur (Komponente (B)), eine En-Verbindung mit einem polycyclischen aromatischen Kohlenwasserstoffgrundgerüst (Komponente (C)) und einen Polymerisationsinitiator (Komponente (D)) umfasst,
wobei die Komponente (C) eine durch die allgemeine Formel (3) dargestellte Verbindung ist: 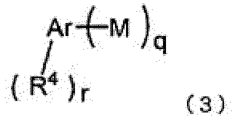 worin Ar einen polycyclischen aromatischen Kohlenwasserstoff darstellt, R⁴ eine Alkylgruppe mit 1 bis 3 Kohlenstoffatomen, die ein Substituent an dem polycyclischen aromatischen Kohlenwasserstoff ist, darstellt, M eine funktionelle Gruppe mit einem En-Grundgerüst, ausgewählt aus der folgenden allgemeinen Formel (4) oder allgemeinen Formel (5), darstellt, q eine ganze Zahl von 1 bis 4 darstellt und r eine ganze Zahl von 0 bis 10 darstellt, 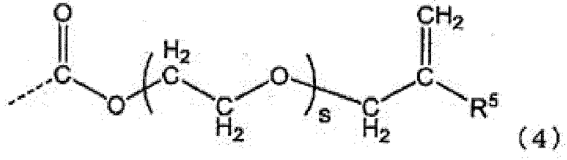 worin R⁵ ein Wasserstoffatom oder eine Methylgruppe darstellt, s eine ganze Zahl von 0 bis 2 darstellt und eine gestrichelte Linie eine Bindung an Ar darstellt, 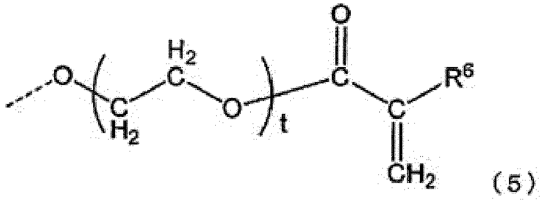
worin R⁶ ein Wasserstoffatom oder eine Methylgruppe darstellt, t eine ganze Zahl von 0 bis 2 darstellt und eine gestrichelte Linie eine Bindung an Ar darstellt, und
worin der polycyclische aromatische Kohlenwasserstoff mindestens eine Verbindung, ausgewählt aus der Gruppe bestehend aus Naphthalin, Anthracen, Pentacen, Pyren, Benzopyren, Chrysen und Triphenylen, ist.

2. Härtbare Zusammensetzung gemäß Anspruch 1, wobei die Komponente (A) eine durch die allgemeine Formel (1) dargestellte Verbindung ist: 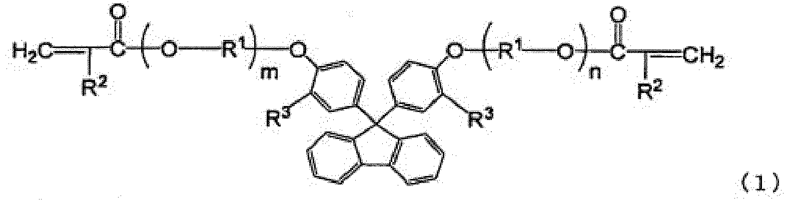 worin m und n ganze Zahlen darstellen, wobei die Summe von m und n 0 bis 4 ist, R¹ eine Alkylengruppe mit 1 bis 5 Kohlenstoffatomen darstellt, R² ein Wasserstoffatom oder eine Methylgruppe darstellt und R³ ein Wasserstoffatom oder eine Methylgruppe darstellt.

3. Härtbare Zusammensetzung gemäß Anspruch 2, wobei die Komponente (A) 9,9-Bis(4-(2-acryloxyethoxy)phenyl)fluoren ist.

4. Härtbare Zusammensetzung gemäß irgendeinem der Ansprüche 1 bis 3, wobei die Komponente (B) eine durch die allgemeine Formel (2) dargestellte Verbindung ist: 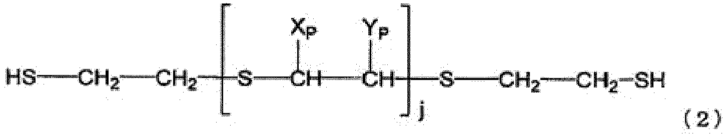 worin j eine ganze Zahl von 0 bis 3 darstellt und Xₚ und Yₚ jeweils unabhängig ein Wasserstoffatom oder eine Methylthiolgruppe darstellen.

5. Härtbare Zusammensetzung gemäß Anspruch 4, wobei die Komponente (B) mindestens eine Verbindung, ausgewählt aus der Gruppe bestehend aus 1,5-Dimercapto-3-thiapentan, 4-Mercaptomethyl-1,8-dimercapto-3,6-dithiaoctan, 4,8-Bis(mercaptomethyl)-1,11-dimercapto-3,6,9-trithiaundecan, 4,7-Bis(mercaptomethyl)-1,11-dimercapto-3,6,9-trithiaundecan und 5,7-Bis(mercaptomethyl)-1,11-dimercapto-3,6,9-trithiaundecan ist.

6. Härtbare Zusammensetzung gemäß irgendeinem der Ansprüche 1 bis 5, wobei die Komponente (C) mindestens eine Verbindung, ausgewählt aus der Gruppe bestehend aus Diallyl-1,4-naphthalindicarboxylat, Diallyl-2,3-naphthalindicarboxylat, Diallyl-1,5-naphthalindicarboxylat, Diallyl-1,8-naphthalindicarboxylat, Diallyl-2,6-naphthalindicarboxylat, 1-Naphthyl(meth)acrylat, 2-Naphthyl(meth)acrylat, (2-(Meth)acryloxyethoxy)-1-naphthyl und (2-(Meth)acryloxyethoxy)-2-naphthyl ist.

7. Härtbare Zusammensetzung gemäß irgendeinem der Ansprüche 1 bis 6, die ferner eine durch die allgemeine Formel (6) dargestellte ethylenisch ungesättigte Verbindung (Komponente (E)) umfasst: 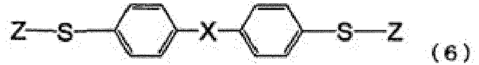 worin X ein Schwefelatom oder eine Sulfonylgruppe darstellt und Z eine (Meth)acryloxylgruppe, eine Vinylgruppe oder eine Allylgruppe darstellt.

8. Härtbare Zusammensetzung gemäß Anspruch 7, wobei die Komponente (E) 4,4'-Bis(methacryloylthio)diphenylsulfid ist.

9. Härtbare Zusammensetzung gemäß Anspruch 7 oder 8, die ferner eine ethylenisch ungesättigte Verbindung (Komponente (F)) als verdünnbares Monomer außer der Komponente (A), der Komponente (C) und der Komponente (E) umfasst.

10. Härtbare Zusammensetzung gemäß Anspruch 9, wobei die Komponente (F) mindestens eine Verbindung, ausgewählt aus der Gruppe bestehend aus Triallylisocyanurat, Triallylcyanurat, Diallylphthalat, Diallylisophthalat, Diallylterephthalat, Triallyltrimellitat, Tetraallylpyromellitat, Phenyl(meth)acrylat, 2-Phenoxyethyl(meth)acrylat, o-Phenylphenol(meth)acrylat, 2-(o-Phenylphenoxy)ethyl(meth)acrylat, Benzyl(meth)acrylat und 2-(Benzyloxy)ethyl(meth)acrylat, ist.

11. Härtbare Zusammensetzung gemäß irgendeinem der Ansprüche 1 bis 10, die einen Inhibitor für die freie radikalische Polymerisation (Komponente (G)) als Stabilisator umfasst.

12. Härtbare Zusammensetzung gemäß Anspruch 11, wobei die Komponente (G) mindestens eine Verbindung ist, die aus einer Gruppe bestehend aus einer Nitrosoverbindung, einer Nitronverbindung und einer Nitroxidverbindung ausgewählt ist.

13. Härtbare Zusammensetzung gemäß Anspruch 11 oder 12, wobei die Komponente (G) ein N-Nitrosophenylhydroxylaminsalz-Derivat ist.

## Revendications

1. Composition durcissable qui comprend un composé de poly(méth)acrylate ayant un cycle fluorène (composant (A)), un composé de polythiol ayant une structure de thioalkyle (composant (B)), un composé d'ène ayant un squelette hydrocarboné aromatique polycyclique (composant (C)) et un initiateur de polymérisation (composant (D)),
dans laquelle le composant (C) est un composé représenté par la formule générale (3) : 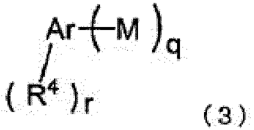 dans laquelle : Ar représente un hydrocarbure aromatique polycyclique ; R⁴ représente un groupe alkyle ayant 1 à 3 atomes de carbone qui est un substituant de l'hydrocarbure aromatique polycyclique ; M représente un groupe fonctionnel ayant un squelette d'ène sélectionné parmi la formule générale (4) ou la formule générale (5) ci-dessous ; q représente un nombre entier allant de 1 à 4 ; et r représente un nombre entier allant de 0 à 10, 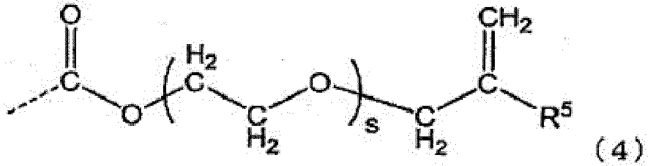 dans laquelle : R⁵ représente un atome d'hydrogène ou un groupe méthyle ; s représente un nombre entier allant de 0 à 2 ; et une ligne pointillée représente une liaison à Ar, 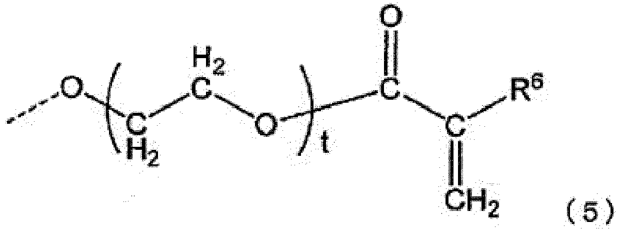
dans laquelle : R⁶ représente un atome d'hydrogène ou un groupe méthyle ; t représente un nombre entier allant de 0 à 2 ; et une ligne pointillée représente une liaison à Ar, et
dans laquelle l'hydrocarbure aromatique polycyclique est au moins un composé sélectionné à partir du groupe constitué par le naphtalène, l'anthracène, le pentacène, le pyrène, le benzopyrène, le chrysène et le triphénylène.

2. Composition durcissable selon la revendication 1, dans laquelle le composant (A) est un composé représenté par la formule générale (1) : 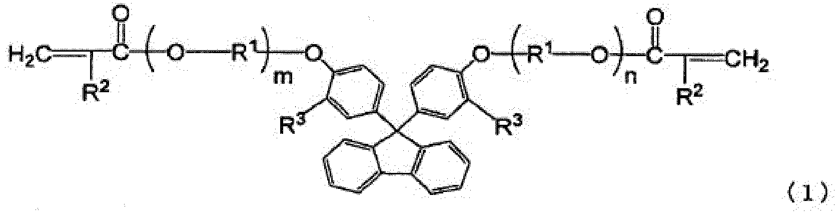 dans laquelle : m et n représentent des nombres entiers, dans laquelle la somme de m et n est 0 à 4 ; R¹ représente un groupe alkylène ayant 1 à 5 atomes de carbone ; R² représente un atome d'hydrogène ou un groupe méthyle ; et R³ représente un atome d'hydrogène ou un groupe méthyle.

3. Composition durcissable selon la revendication 2, dans laquelle le composant (A) est le 9,9-bis(4-(2-acryloxyéthoxy)phényl)fluorène.

4. Composition durcissable selon l'une quelconque des revendications 1 à 3, dans laquelle le composant (B) est un composé représenté par la formule générale (2) : 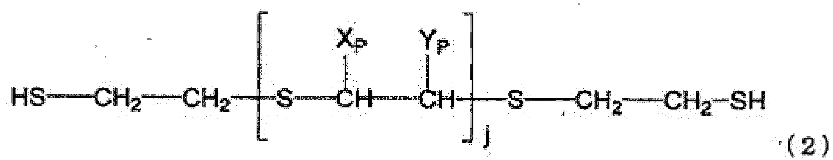 dans laquelle: j représente un nombre entier allant de 0 à 3 ; et Xp et Yp représentent chacun indépendamment un atome d'hydrogène ou un groupe méthylthiol.

5. Composition durcissable selon la revendication 4, dans laquelle le composant (B) est au moins un composé sélectionné à partir du groupe constitué par le 1,5-dimercapto-3-thiapentane, le 4-mercaptométhyl-1,8-dimercapto-3,6-dithiaoctane, le 4,8-bis-(mercaptométhyl)-1,11-dimercapto-3,6,9-trithiaundécane, le 4,7-bis(mercaptométhyl)-1,11-dimercapto-3,6,9-trithiaundécane et le 5,7-bis(mercaptométhyl)-1,11-dimercapto-3,6,9-trithiaundécane.

6. Composition durcissable selon l'une quelconque des revendications 1 à 5, dans laquelle le composant (C) est au moins un composé sélectionné à partir du groupe constitué par le 1,4-naphtalènedicarboxylate de diallyle, le 2,3-naphtalènedicarboxylate de diallyle, le 1,5-naphtalènedicarboxylate de diallyle, le 1,8-naphtalènedicarboxylate de diallyle, le 2,6-naphtalènedicarboxylate de diallyle, le (méth)acrylate de 1-naphtyle, le (méth)acrylate de 2-naphtyle, le (2-(méth)acryloxyéthoxy) 1-naphtyle et le (2-(méth)-acryloxyéthoxy) 2-naphtyle.

7. Composition durcissable selon l'une quelconque des revendications 1 à 6, qui comprend en outre un composé à insaturation éthylénique (composant (E)) représenté par la formule générale (6) : 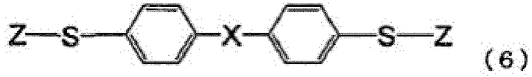 dans laquelle : X représente un atome de soufre ou un groupe sulfonyle ; et Z représente un groupe (méth)acryloyle, un groupe vinyle ou un groupe allyle.

8. Composition durcissable selon la revendication 7, dans laquelle le composant (E) est le 4,4'-bis(méthacryloylthio)diphénylsulfure.

9. Composition durcissable selon la revendication 7 ou 8, qui comprend en outre un composé à insaturation éthylénique (composant (F)) en tant que monomère diluable autre que le composant (A), le composant (C) et le composant (E).

10. Composition durcissable selon la revendication 9, dans laquelle le composant (F) est au moins un composé sélectionné à partir du groupe constitué par l'isocyanurate de triallyle, le cyanurate de triallyle, le phtalate de diallyle, l'isophtalate de diallyle, le téréphtalate de diallyle, le trimellitate de triallyle, le pyromellitate de tétraallyle, le (méth)acrylate de phényle, le (méth)acrylate de 2-phénoxyéthyle, le (méth)acrylate d'o-phénylphénol, le (méth)acrylate de 2-(o-phénylphénoxy)éthyle, le (méth)acrylate de benzyle et le (méth)acrylate de 2-(benzyloxy)éthyle.

11. Composition durcissable selon l'une quelconque des revendications 1 à 10, qui comprend un inhibiteur de polymérisation radicalaire libre (composant (G)) en tant que stabilisant.

12. Composition durcissable selon la revendication 11, dans laquelle le composant (G) est au moins un composé sélectionné à partir du groupe constitué par un composé de nitroso, un composé de nitrone et un composé de nitroxyde.

13. Composition durcissable selon la revendication 11 ou 12, dans laquelle le composant (G) est un dérivé de sel de N-nitrosophénylhydroxylamine.
